# EUROPEAN PATENT SPECIFICATION

(11) **EP 2 815 956 B1**
(45) Date of publication and mention of the grant of the patent: **19.06.2019**
(21) Application number: 13749355.7
(22) Date of filing: 12.02.2013
(51) Int. Cl.: B63B 35/04, F16L 1/12, F16L 1/20

(54) **PIPELINE-LAYING VESSEL AND PIPELINE-LAYING METHOD USING SAME**
PIPELINEVERLEGUNGSSCHIFF UND PIPELINEVERLEGUNGSVERFAHREN DAMIT
NAVIRE DE POSE DE CONDUITE ET PROCÉDÉ DE POSE DE CONDUITE UTILISANT CE NAVIRE

(30) Priority: 15.02.2012 KR 20120015284
(43) Date of publication of application: 24.12.2014
(73) Proprietor: Samsung Heavy Ind. Co., Ltd., Seoul 137-955 (KR)
(72) Inventor: PARK, Sun Kyu, Busan 616-782 (KR); PARK, Sung Kug, Geoje-si Gyeongsangnam-do 656-790 (KR); YOO, Hong Jae, Suwon-si Gyeonggi-do 443-727 (KR); LEE, Hee Won, Geoje-si Gyeongsangnam-do 656-779 (KR); LIM, Ok Jin, Muan-gun Jeollanam-do 534-904 (KR); HONG, Young Hwa, Daejeon 305-761 (KR)
(74) Representative: Hirsch & Associés
(86) International application number: PCT/KR2013/001092
(87) International publication number: WO 2013/122366

(56) References cited:
- WO-A2-00/05525
- WO-A2-2011/086100
- GB-A- 2 477 755
- KR-A- 20090 130 007
- US-A- 3 924 415
- US-A- 4 091 629
- US-A- 4 257 718
- US-A- 4 257 718

## Description

### [Technical Field]

The present invention relates to a pipe-laying ship for laying a pipeline on a seabed, and a method of laying a pipeline using the same.

### [Background Art]

Pipe-laying ships for laying a pipeline on a seabed move to shallow or deep waters to lay a pipeline on a seabed using a pipe-laying system provided in a hull. The pipeline is submerged into the seabed after pipe sections having a unit length are interconnected on the pipe-laying ship by welding.

Such pipe-laying ships employ an S-lay system or a J-lay system according to a method of laying the pipeline.

In the S-lay system, when the pipeline is submerged from the pipe-laying ship along a pipeline laying path, the pipeline is lowered along an S-shaped course having a relatively large radius of curvature with the aid of an inclined arch ramp known as a stinger and is laid on the seabed. Thus, the S-lay system is mainly used to lay the pipeline in relatively shallow waters, because the pipeline has a possibility of plastic deformation caused by bending of the pipeline at a point at which the pipeline leaves the stinger due to a load of the submerged pipeline.

In the J-lay system, the pipeline is submerged from the pipe-laying ship along a ramp installed vertically or at a steep slope and is laid on the seabed. Accordingly, the pipeline is submerged toward the seabed without plastic deformation, and thus the J-lay system is mainly used to lay the pipeline in deep waters.

Meanwhile, ships based on the S-lay system are suitable to lay a pipeline in shallow waters, and have a relatively rapid laying speed per unit length compared to ships based on the J-lay system, because the pipeline is previously prepared in a horizontal condition.

However, to use ships based on the S-lay system to lay a pipeline in deep waters, a length of the stinger for supporting weight of the pipeline to be laid is increased. As such, the ships based on the S-lay system are rarely used to lay pipelines in deep waters due to structural rigidity and stability

Documents WO 2011/086100 A2, US 4 257 718 A and GB 2 477 755 A, which is considered the closest prior art, disclose different known examples of pipe-laying ships.

### [Disclosure]

### [Technical Problem]

Embodiments of the present invention are intended to provide an S-lay type pipe-laying ship capable of easily laying a pipeline in deep waters.

Further, embodiments of the present invention are intended to provide an S-lay type pipe-laying ship capable of laying a pipeline regardless of the depth of water, and a method of laying the pipeline using the same.

In addition, embodiments of the present invention are intended to provide an S-lay type pipe-laying ship capable of adjusting an inclination of a platform on which a work station for assembling a pipeline is provided.

### [Technical Solution]

According to an aspect of the present invention, there is provided a pipe-laying ship, which includes: a platform which is installed along a pipe-laying path of a pipeline and on which one or more work stations for assembling the pipeline are placed; a stinger that is connected adjacent to one end of the platform and guides the pipeline to a seabed; and a lift actuator that adjusts an inclination of the platform. In addition, the platform and the stinger are integrally connected.

Here, the platform may be installed to be rotatable around the one end thereof.

Further, the stinger may be installed to be rotated together with rotation of the platform

Further, the platform may include a variable ladder that is installed on at least one lateral face thereof and has rungs unfolding when the platform is raised.

Also, the one or more work stations may include any one of a welding station, a coating station, a checkup station, and a tensioner.

Further, the pipe-laying path may be defined by the platform and the stinger, and include a first pipe-laying path formed when the platform is held horizontally and a second pipe-laying path formed when the platform is rotated to be inclined. The first pipe-laying path may form a path for laying the pipeline in shallow waters, and the second pipe-laying path may form a path for laying the pipeline in deep waters.

Further, the one end of the platform may be connected to rotary shafts provided for a stern upper deck of a hull, and the stinger may be fixed to the platform at one side thereof and be inclined downward toward a water surface at the other side thereof.

According to another aspect of the present invention, there is provided a method of laying a pipeline using the aforementioned pipe-laying ship, which includes: forming the first pipe-laying path or the second pipe-laying path according to a position at which the pipeline is laid; and laying the pipeline along the formed pipe-laying path.

### [Advantageous Effects]

According to embodiments of the present invention, an inclination of a platform on which one or more work stations for assembling a pipeline are placed can be adjusted.

Further, according to embodiments of the present invention, a pipeline can be smoothly laid regardless of a depth of the seabed by changing an inclination of a platform on which a work station is provided when the pipeline is laid in shallow and deep waters.

### [Description of Drawings]

FIG. 1 is a perspective view schematically illustrating a pipe-laying ship according to an embodiment of the present invention.
FIG. 2 is a plan view of the pipe-laying ship according to the embodiment of the present invention.
FIG. 3 is a side view of the pipe-laying ship according to the embodiment of the present invention.
FIG. 4 illustrates a connection portion of a platform and a stinger according to the embodiment of the present invention.
FIG. 5 is a perspective view illustrating a state in which the platform according to the embodiment of the present invention is maintained horizontally.
FIG. 6 is a perspective view illustrating a state in which the platform according to the embodiment of the present invention is raised to have an inclination.
FIG. 7 illustrates a process of laying a pipeline in shallow waters according to the embodiment of the present invention.
FIG. 8 illustrates a process of laying a pipeline in deep waters according to the embodiment of the present invention.

### [Mode for Invention]

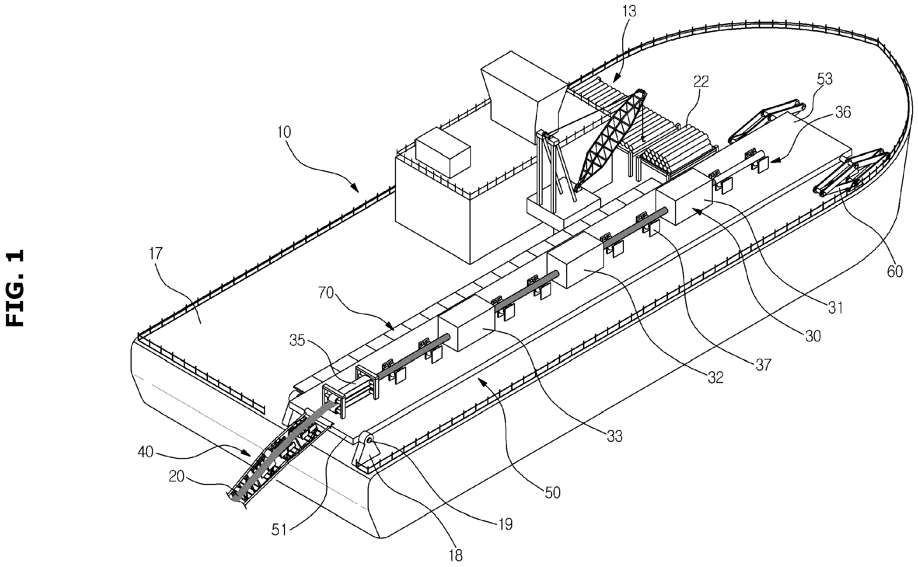

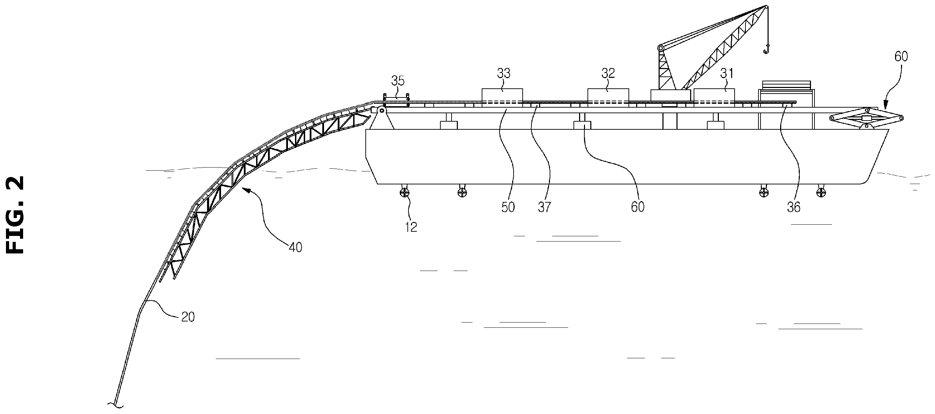

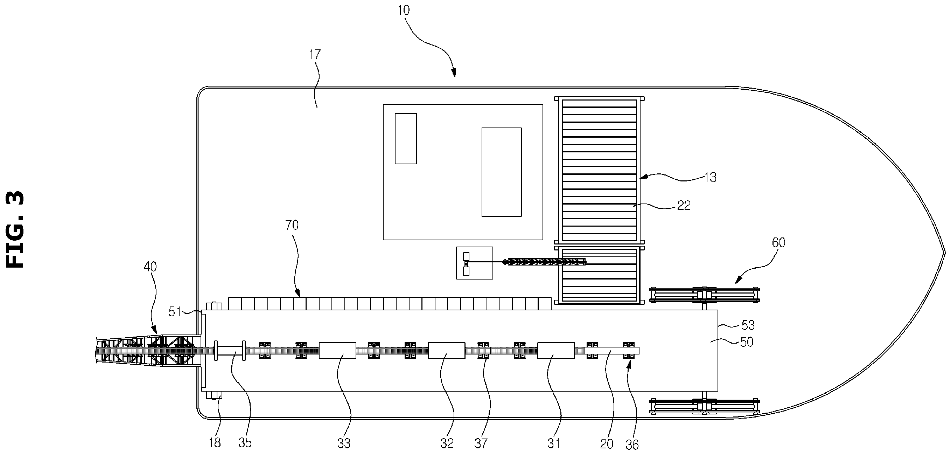

Hereinafter, embodiments of the invention will be described in detail with reference to the accompanying drawings. FIG. 1 is a perspective view schematically illustrating a pipe-laying ship according to an embodiment of the present invention. FIG. 2 is a plan view of the pipe-laying ship according to the embodiment of the present invention. FIG. 3 is a side view of the pipe-laying ship according to the embodiment of the present invention.

Referring to FIGS. 1 to 3, an S-lay type pipe-laying ship 10 according to an embodiment of the present invention is a pipe-laying ship for laying a pipeline 20 on a seabed, and is supplied with numerous pipe sections 22 having a unit length by a pipe carrier. The supplied pipe sections 22 are connected on one or more work stations 30 provided for a hull, and are submerged into the seabed.

The pipe-laying ship 10 moves to a position for laying the pipeline 20 using a propulsion system 12 generating a propulsive force. The pipeline 20 is guided to a water surface through a stinger 40 mounted on the stern of the hull while the pipe-laying ship 10 moves, and is installed on the seabed.

Each of the numerous pipe sections 22 is formed of a metal in a cylindrical shape, and has a coated film for preventing corrosion on an outer circumferential surface thereof. However, opposite ends of each of the numerous pipe sections 22 are left uncoated for welding.

The pipe-laying ship 10 is provided with the work station 30 at which the numerous pipelines 20 are integrally connected. The work station 30 may include a welding station 31, a checkup station 32, a coating station 33, and at least one tensioner 35 that are located along a pipe-laying path of the pipeline 20.

The pipe-laying path of the pipeline 20 refers to a movement path of the pipeline 20 submerged into the waters after the pipe sections 22 having the unit length are assembled on the pipe-laying ship 10. The pipe-laying path may be a path that extends from the bow of the pipe-laying ship 10 along a length of the pipe-laying ship 10 and extends to the water surface via the stinger 40.

The pipe-laying path may be provided to be nearly horizontal at the numerous work stations 30 installed on the pipe-laying ship 10, and to be inclined downward at a given curvature at the stinger 40 by which the pipeline is guided to the seabed.

The numerous pipe sections 22 supplied by the pipe carrier are stored in a storage space 13, and are transferred to a fitting station 36 that is a start position of the pipe-laying path.

At the fitting station 36, the stored pipe sections 22 are aligned in a row behind the assembled pipeline 20, and the aligned pipe sections 22 are transferred to the welding station 31 by a transfer apparatus 37 such as a conveyor or rollers.

At the welding station 31, the numerous pipe sections 22 having the unit length are welded to form the continuous pipeline 20.

A welded zone of each of the numerous pipe sections 22 is examined for defects by a nondestructive testing apparatus provided for the checkup station 32. Then, the numerous pipe sections 22 are transferred to the coating station 33. The welded zone of each pipe section 22 is coated at the coating station 33.

A distance between the two work stations 30 forming the continuous pipe-laying path may be equal to or more than twice the unit length of the pipe section 22.

The tensioner 35 is equipped with endless tracks disposed to face each other. The pipeline 20 is supported between the two tracks, so that the tensioner 35 sustains weight of the pipeline 20 submerged into the sea.

Although not illustrated in the present embodiment, numerous welding stations 31 may be provided along the pipe-laying path. The one or more work stations 30 may further include a polishing station for polishing the welded zone, and a surface treatment station for applying a surface treatment agent to the welded zone at a predetermined thickness.

Meanwhile, the one or more work stations 30 may be disposed in a row such that the pipeline 20 can be transferred on the pipe-laying ship 10 in a horizontal state.

Further, the one or more work stations 30 may be disposed on a platform 50, one end 51 of which is rotatably installed on the hull of the pipe-laying ship 10.

The platform 50 forms a part of the pipe-laying path of the pipeline 20 moving on the hull, and may be formed of a plate that is disposed in a lengthwise direction of the pipe-laying ship 10 and has high rigidity.

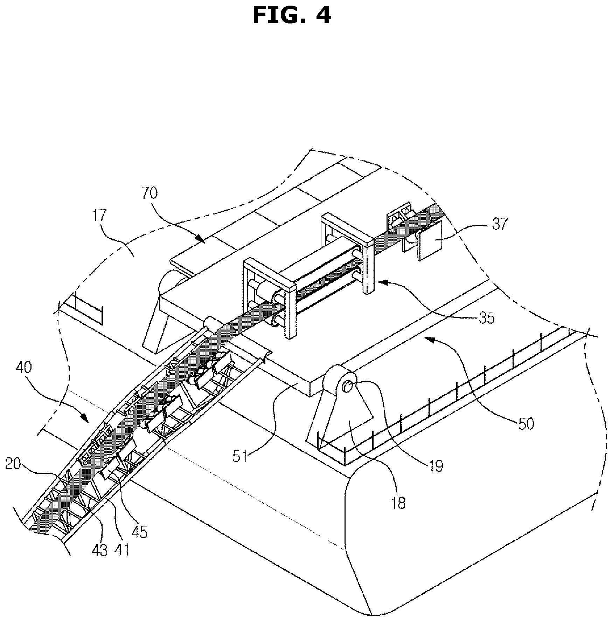

As illustrated in FIG. 4, the stinger 40 may be installed on one end 51 of the platform 50, and supports the pipeline 20 such that the pipe-laying path of the pipeline 20 leaving the pipe-laying ship 10 is smoothly inclined when the pipeline 20 is laid on the seabed.

The stinger 40 may be installed such that one side thereof is fixed to one end 51 of the platform 50, and be inclined downward toward the water surface at the other side thereof at a predetermined curvature.

The stinger 40 includes a pair of tubular lateral frames 41 extending toward the water surface. The pair of lateral frames 41 may be interconnected by tubular support frames 43 extending in a transverse direction.

Numerous transfer rollers 45 for guiding the movement of the pipeline 20 may be disposed apart on the support frames 43 in the extending direction of the stinger 40.

Further, one side of the stinger 40 is integrally coupled with the platform 50 by welding in the vicinity of one end 51 of the platform 50 so as to be rotated together when the platform 50 is rotated.

This is intended to allow the pipe-laying path of the pipeline 20, which extends from the bow to the water surface along the platform 50 and the stinger 40, to be changed by the rotation of the platform 50. In other words, when an inclination of the platform 50 is changed, an angle at which the stinger 40 guides the pipeline 20 to the water surface is changed together.

Although not illustrated in the present embodiment, the stinger 40 connected to the platform 50 may be provided such that only the angle of the stinger 40 is changed by a separate actuator. In this case, of course, the angle of the stinger 40 may be changed together when the angle of the platform 50 is changed.

Meanwhile, one end 51 of the platform 50 which is rotatably installed on the pipe-laying ship 10 is rotatably coupled to rotary shafts 19 of shaft support members 18 installed on a stern upper deck 17. At least one lift actuator 60 for lifting the platform 50 may be provided at the other end 53 of the platform 50.

The lift actuator 60 is an apparatus that lifts the other end 53 of the platform 50 between a horizontal position at which the platform 50 is held horizontally on the pipe-laying ship 10 and an inclined position at which the platform 50 is inclined at a given angle.

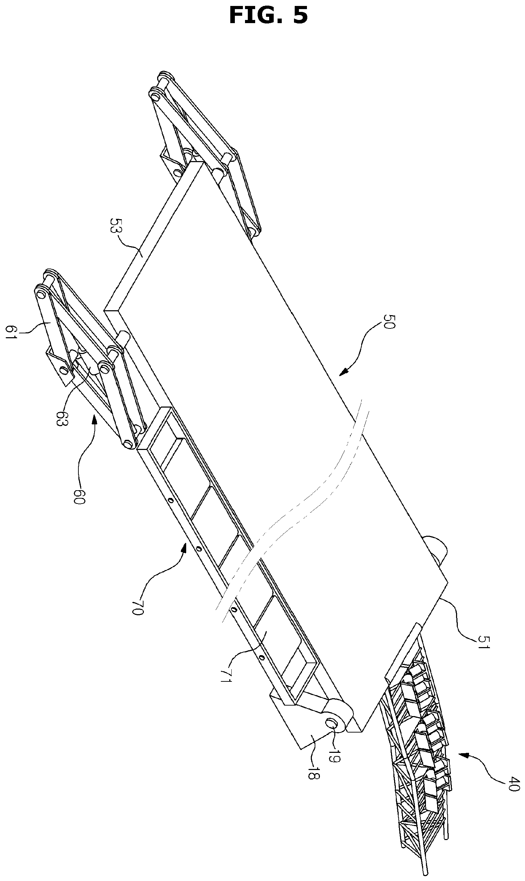

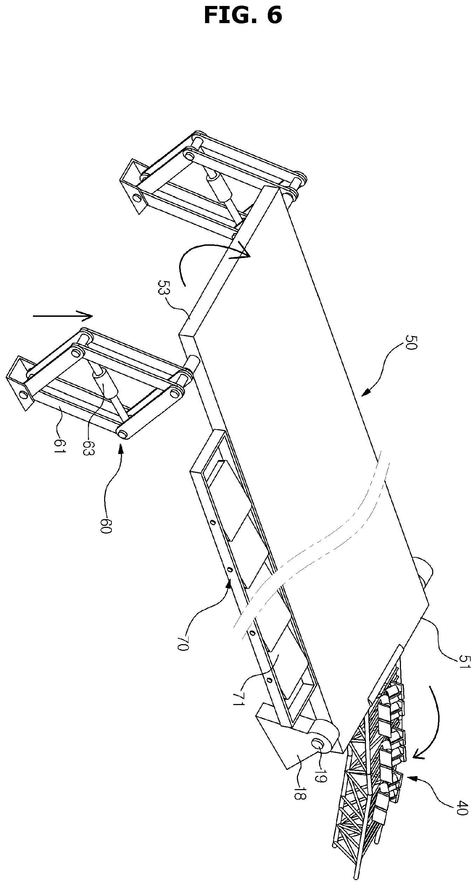

Referring to FIGS. 5 and 6, each of the lift actuators 60 may include numerous link members 61 that are connected to have a four-bar linkage mechanism in a closed loop, and a hydraulic cylinder 63 that is driven to fold or unfold the numerous link members 61.

When the other end 53 of the platform 50 is raised by the driving of the lift actuators 60, one end 51 of the platform 50 is rotated upward around the rotary shafts 19, and thus the platform 50 is maintained at a predetermined inclination.

In this case, the stinger 40 coupled to one end 51 of the platform 50 is rotated downward along with the rotation of the platform 50. As such, an angle at which the pipeline 20 is guided by the stinger 40 is increased.

As illustrated in FIG. 2, the numerous lift actuators 60 may be disposed in the lengthwise direction of the platform so as to be able to sustain the dead weight of the platform 50.

Further, in the description of the present embodiment, the lift actuator 60 is made up of the numerous link members 61 and the hydraulic cylinder 63, but is not limited thereto. A variety of known means may be applied as long as they can raise the other end 53 of the platform to a predetermined height, which is also included in the technical spirit of the present invention.

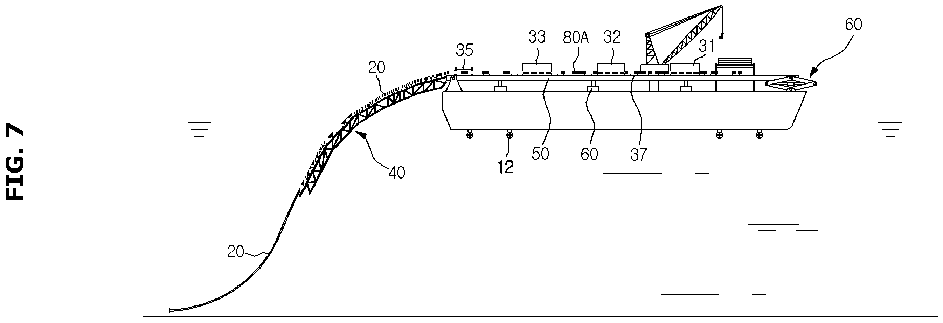

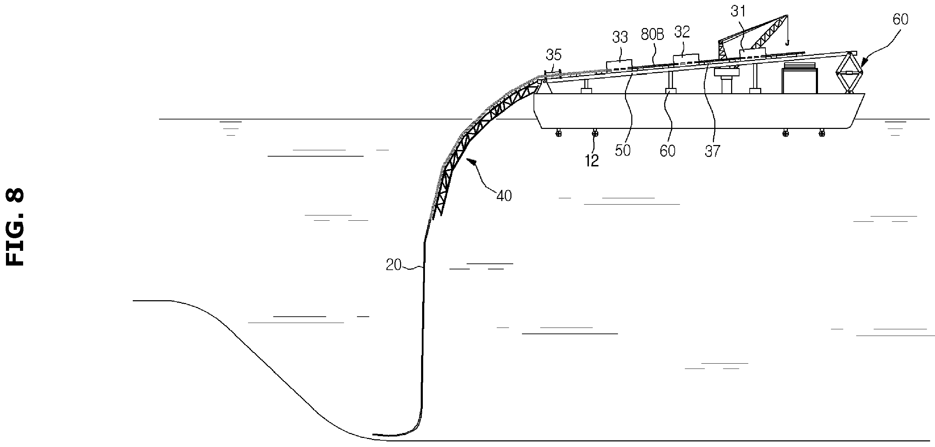

With this configuration, the pipe-laying ship 10 has a first pipe-laying path (see FIG. 7) along which the pipeline 20 is laid with the platform 50 held horizontally, and a second pipe-laying path (see FIG. 8) along which the pipeline 20 is laid with the platform 50 inclined.

The first pipe-laying path may be used to lay the pipeline 20 in shallow waters, and the second pipe-laying path may be used to lay the pipeline 20 in deep waters that are relatively deeper than the shallow waters.

Referring to FIGS. 5 and 6 again, a variable ladder 70 having rungs 71 that unfold when the platform 50 is raised may be installed on one lateral face of the platform 50. This is intended to enable a worker to climb up to the platform 50 using the variable ladder 70 when the platform 50 is raised.

The variable ladder 70 may have a typical structure in which the numerous rungs 71 are disposed to be flat in a horizontal state, and when the platform 50 is rotated to be inclined, the flat rungs 71 unfold while being rotated along with the platform 50 and are disposed in a stairway shape.

Hereinafter, a method of laying a pipeline of a pipe-laying ship according to an embodiment of the present invention will be described along with effects thereof

First, as illustrated in FIG. 7, when the pipeline 20 is laid in shallow waters, the platform 50 is disposed on the pipe-laying ship 10 in a horizontal state.

In other words, the pipe sections 22, which are disposed on the pipe-laying ship 10 and have a unit length, are subjected to welding, examination, and coating while moving along a first pipe-laying path 80A defined by one or more the work stations 30 placed on the platform 50. Then, the pipe sections 22 are guided to the stinger 40 with tension thereof maintained by the tensioner 35, and are submerged under the water surface.

When the pipeline 20 is laid in deep waters, the platform 50 is rotated as illustrated in FIG. 8, and the one or more work stations 30 are disposed in a row at a predetermined inclination.

In this case, the stinger 40 integrally connected to one end 51 of the platform 50 is rotated together with the platform 50, thus changing an angle at which the pipeline 20 is guided to the water surface.

Thus, the pipe-laying path of the pipeline 20 which is defined by the stinger 40 and the platform 50 on which the one or more work stations 30 are placed forms a second pipe-laying path 80B having a predetermined inclination.

The pipeline 20 is submerged into the sea along the second pipe-laying path 80B in a nearly vertical state. Thus, the pipeline 20 can reduce an influence of plastic deformation caused by bending, and thus be installed in deep waters.

Further, a direction in which the pipeline 20 is transferred by the one or more work stations 30 and a direction in which the pipeline 20 is transferred by the stinger 40 are changed together. Thus, it is possible to relatively reduce the plastic deformation caused by the bending of the pipeline 20 at a portion at which the pipeline is transferred to the stinger 40 compared to the case in which only the angle at which the stinger 40 is guided to the water surface is changed.

The invention has been illustrated and described with respect to specific embodiments. However, the invention is not limited to the above embodiments, and thus it is apparent to those skilled in the art that various modifications, additions and substitutions are possible, without departing from the scope of the invention as disclosed in the accompanying claims.

## Claims

1. A pipe-laying ship (10) comprising:
a platform (50) which is installed along a pipe-laying path of a pipeline (20) and on which one or more work stations (30) for assembling the pipeline (20) are placed;
a stinger (40) that is connected adjacent to one end of the platform (50) and guides the pipeline (20) to a seabed; and
a lift actuator (60) that adjusts an inclination of the platform (50),
wherein the platform (50) and the stinger (40) are integrally connected.

2. The pipe-laying ship (10) according to claim 1, wherein the platform (50) is installed to be rotatable around the one end thereof

3. The pipe-laying ship (10) according to claim 2, wherein the stinger (40) is installed to be rotated together with rotation of the platform (50).

4. The pipe-laying ship (10) according to any one of claims 1 to 3, wherein the platform (50) includes a variable ladder (70) that is installed on at least one lateral face thereof and has rungs (71) that unfold when the platform is raised.

5. The pipe-laying ship (10) according to any one of claims 1 to 3, wherein the one or more work stations (30) include any one of a welding station (31), a coating station (33), a checkup station (32), and a tensioner (35).

6. The pipe-laying ship (10) according to any one of claims 1 to 3, wherein:
the pipe-laying path is defined by the platform (50) and the stinger (40), and includes a first pipe-laying path formed when the platform is held horizontally and a second pipe-laying path formed when the platform is rotated to be inclined; and
the first pipe-laying path forms a path for laying the pipeline in shallow waters, and the second pipe-laying path forms a path for laying the pipeline in deep waters.

7. The pipe-laying ship (10) according to any one of claims 1 to 3, wherein the one end of the platform is connected to rotary shafts (19) provided for a stern upper deck of a hull, and the stinger is fixed to the platform at one side thereof and is inclined downward toward a water surface at the other side thereof

8. A method of laying a pipeline (20) using the pipe-laying ship (10) according to claim 6, comprising:
forming the first pipe-laying path or the second pipe-laying path according to a position at which the pipeline is laid; and
laying the pipeline along the formed pipe-laying path.

## Patentansprüche

1. Ein Pipelineverlegungsschiff (10), umfassend:
- eine Plattform (50), die entlang eines Pipelineverlegungs-pfads einer Pipeline (20) installiert ist und auf der eine oder mehrere Arbeitsstationen (30) zum Zusammenbauen der Pipeline (20) angeordnet sind;
- einen Ausleger (40), der an ein Ende der Plattform (50) angrenzend angeschlossen ist und die Pipeline (20) zu einem Meeresboden führt; und
- ein Hebeaktuator (60), der eine Neigung der Plattform (50) einstellt,
wobei die Plattform (50) und der Ausleger (40) integral verbunden sind.

2. Das Pipelineverlegungsschiff (10) nach Anspruch 1, wobei die Plattform (50) derart installiert ist, dass sie um sein Ende drehbar ist.

3. Das Pipelineverlegungsschiff (10) nach Anspruch 2, wobei der Ausleger (40) derart installiert ist, dass er zusammen mit der Drehung der Plattform (50) gedreht wird.

4. Das Pipelineverlegungsschiff (10) nach einem der Ansprüche 1 bis 3, wobei die Plattform (50) eine verstellbare Leiter (70) aufweist, die an mindestens einer Seitenfläche davon installiert ist und Sprossen (71) aufweist, die aufklappen, wenn die Plattform angehoben wird.

5. Das Pipelineverlegungsschiff (10) nach einem der Ansprüche 1 bis 3, wobei die eine oder mehreren Arbeitsstationen (30) eine Schweißstation (31), eine Beschichtungsstation (33), eine Kontrollstation (32) und eine Spannvorrichtung (35) aufweisen.

6. Das Pipelineverlegungsschiff (10) nach einem der Ansprüche 1 bis 3, wobei:
- der Pipelineverlegungspfad durch die Plattform (50) und den Ausleger (40) definiert ist, und einen ersten Pipelineverlegungspfad aufweist, der gebildet wird, wenn die Plattform horizontal gehalten wird, und einen zweiten Pipelineverlegungspfad, der gebildet wird, wenn die Plattform gedreht wird, um geneigt zu sein; und
- der erste Pipelineverlegungspfad einen Pfad zur Verlegung der Pipeline in flachen Gewässern und der zweite Pipelineverlegungspfad einen Pfad zur Verlegung der Pipeline in tiefen Gewässern bildet.

7. Das Pipelineverlegungsschiff (10) nach einem der Ansprüche 1 bis 3, wobei das eine Ende der Plattform mit Drehachsen (19) verbunden ist, die für ein oberes Achterdeck eines Rumpfes vorgesehen sind, und der Ausleger an einer Seite der Plattform befestigt ist und an seiner anderen Seite nach unten zu einer Wasseroberfläche geneigt ist.

8. Ein Pipelineverlegungsverfahren (20) unter Verwendung des Pipelineverlegungsschiffs (10) nach Anspruch 6, umfassend:
- Bilden des ersten Pipelineverlegungspfads oder des zweiten Pipelineverlegungspfads gemäß einer Position, an der die Pipeline verlegt wird; und
- Verlegen der Pipeline entlang dem gebildeten Pipelineverlegungspfad.

## Revendications

1. Un navire de pose de conduite (10) comprenant :
- une plateforme (50) qui est installée le long du chemin de pose de conduite d'un pipeline (20) et sur laquelle sont placées une ou plusieurs stations de travail (30) pour assembler le pipeline (20);
- un guide (40) qui est relié de façon adjacente à une extrémité de la plateforme (50) et qui guide le pipeline (20) vers le fond marin; et
- un actionneur de levage (60) qui règle une inclinaison de la plateforme (50),
dans lequel la plateforme (50) et le guide (40) sont reliés de façon solidaire.

2. Le navire de pose de conduite (10) selon la revendication 1, dans lequel la plateforme (50) est installée de façon rotative autour de l'une de ses extrémités.

3. Le navire de pose de conduite (10) selon la revendication 2, dans lequel le guide (40) est installée de façon à être rotative en même temps que se produit la rotation de la plateforme (50).

4. Le navire de pose de conduite selon une quelconque des revendications 1 à 3, dans lequel la plateforme (50) inclut une échelle variable (70) qui est installée sur au moins une de ses faces latérales et comporte des échelons qui se déroulent lorsque la plateforme est levée.

5. Le navire de pose de conduite (10) selon une quelconque des revendications 1 à 3, dans lequel un ou plusieurs des postes de travail (30) comprennent un poste de soudage (31), un poste de revêtement (33), un poste de contrôle et un poste de tension (35).

6. Le navire de pose de conduite (10) selon une quelconque des revendications 1 à 3, dans lequel :
- le chemin de pose de conduite est défini par la plateforme (50) et le guide (40), et inclut un premier chemin de pose de conduite qui se forme lorsque la plateforme est maintenue horizontale et un second chemin de pose de conduite qui se forme lorsque la plateforme est mise en rotation pour s'incliner ; et
- le premier chemin de pose de conduite forme une voie pour poser le pipeline dans des eaux peu profondes et le second chemin de pose de conduite forme une voie pour poser le pipeline dans des eaux profondes.

7. Le navire de pose de conduite (10) selon une quelconque des revendications 1 à 3, dans lequel l'une des extrémités de laplateforme est connectée à des arbres rotatifs (19) prévus pour un pont supérieur de l'étrave et le guide est fixé sur un des côtés de la plateforme et est inclinée vers le bas dans la direction de la surface de l'eau de l'autre côté

8. Un procédé de pose d'un pipeline (20) utilisant un navire de pose de conduite (10) selon la revendication 6, comprenant :
- la formation du premier chemin de pose de conduite ou du second chemin de pose de conduite selon la position à laquelle le pipeline est posé ; et
- la pose du pipeline le long du chemin de pose de conduite.
